Europäisches Patentamt

European Patent Office

Office européen des brevets

(11) Publication number: **0 372 438 A2**

# EUROPEAN PATENT APPLICATION

(21) Application number: 89122262.2

(51) Int. Cl.5: **G02B 5/08, G02B 1/10**

(22) Date of filing: 02.12.89

(30) Priority: 05.12.88 US 280043

(43) Date of publication of application:
**13.06.90 Bulletin 90/24**

(84) Designated Contracting States:
**DE FR GB**

(71) Applicant: **HONEYWELL INC.**
**Honeywell Plaza**
**Minneapolis Minnesota 55408(US)**

(72) Inventor: **Cole, Barrett E.**
**3010 W. 12th Street**
**Bloomington Minnesota 55344(US)**

(74) Representative: **Rentzsch, Heinz et al**
**Honeywell Europe S.A. Holding KG Patent &**
**License Dept. Postfach 10 08 65**
**Kaiserleistrasse 39**
**D-6050 Offenbach am Main(DE)**

(54) **UV and plasma stable high-reflectance multilayer dielectric mirror.**

(57) An improved high reflectance multilayer dielectric mirror in which the final layers (12) are of a UV stable material such as $HfO_2/SiO_2$ or $ZrO_2/SiO_2$ which final layers are deposited over the $TiO_2/SiO_2$ layers (10).

*Fig. 1*

## UV AND PLASMA STABLE HIGH-REFLECTANCE MULTILAYER DIELECTRIC MIRROR

### BACKGROUND AND SUMMARY OF THE INVENTION

This invention is directed to improved multilayer dielectric mirrors, particularly for use in ring laser angular rate sensors (ring laser gyros).

Ring laser gyro mirrors are exposed to ultraviolet (UV) and plasma from the gyro He-Ne plasma. The gyro mirror multilayer dielectric materials commonly in use, that is, $TiO_2/SiO_2$, is sensitive to both in ways which degrade mirror reflectance and thus deleteriously affect gyro performance. The problem of UV-induced mirror loss changes is generally a small effect generating loss changes in the range of 10-100 ppm (parts per million). The problem of plasma-induced loss changes is one which ultimately appears to affect mirror lifetime and can ultimately give rise to large loss changes. Only in applications such as the ring laser gyro where the mirrors are directly in a He-Ne plasma, the mirror reflectances are very high in the range of 99.99% and the reflectances must be stable over long periods are these considerations important. If UV effects were encountered in a conventional mirror material, a standard solution would involve fabricating an entire mirror from a different UV stable material.

This invention describes using a UV sensitive series of (high index/low index) quarter wave pairs to provide the rapid gain in mirror reflectance and uses a second series of UV insensitive (high index/low index) quarter wave pairs on top of the stack to improve the mirror UV properties. An example of the UV and plasma insensitive material is hafnium oxide ($HfO_2$) or zirconium oxide ($ZrO_2$). To fabricate a full mirror out of $HfO_2/SiO_2$ pairs would require on the order of 40 layers depending precisely on the refractive index and desired reflectance levels. To achieve comparable reflectance levels with improved UV stability with the present invention requires only about 28 layers, that is three $HfO_2/SiO_2$ layer pairs on eleven $TiO_2/SiO_2$ layer pairs. The reducing of the time required for depositing materials can be critical in making low defect, high reflectance mirrors for use in ring laser gyros. Increased deposition time required by more layers increases the chance for system arcing due to several causes. For yield considerations, to fabricate good mirrors, it is necessary to keep the deposition time to a minimum. The present invention combines the high reflectance gain generated by using high index materials with the UV and plasma stability of outer layers of high band gap materials to provide a mirror much less sensitive to the gyro environment which can more quickly be fabricated.

### BRIEF DESCRIPTION OF THE DRAWINGS

FIGURE 1 is a pictorial view of the base mirror layer design according to the invention.

FIGURE 2 is a graphical disclosure of calculated reduction of UV-induced loss changes for $TiO_2/SiO_2$ mirrors when $HfO_2/SiO_2$ pairs are added.

FIGURE 3 is a graphical presentation of typical plasma-induced loss change for ion beam $TiO_2/SiO_2$ mirrors with various $SiO_2$ thicknesses.

FIGURE 4 is a graphical presentation of plasma-induced loss change for $ZrO_2/SiO_2$ and $HfO_2/SiO_2$ stacks deposited on a $TiO_2/SiO_2$ mirror.

### DETAILED DESCRIPTION OF THE PREFERRED EMBODIMENT

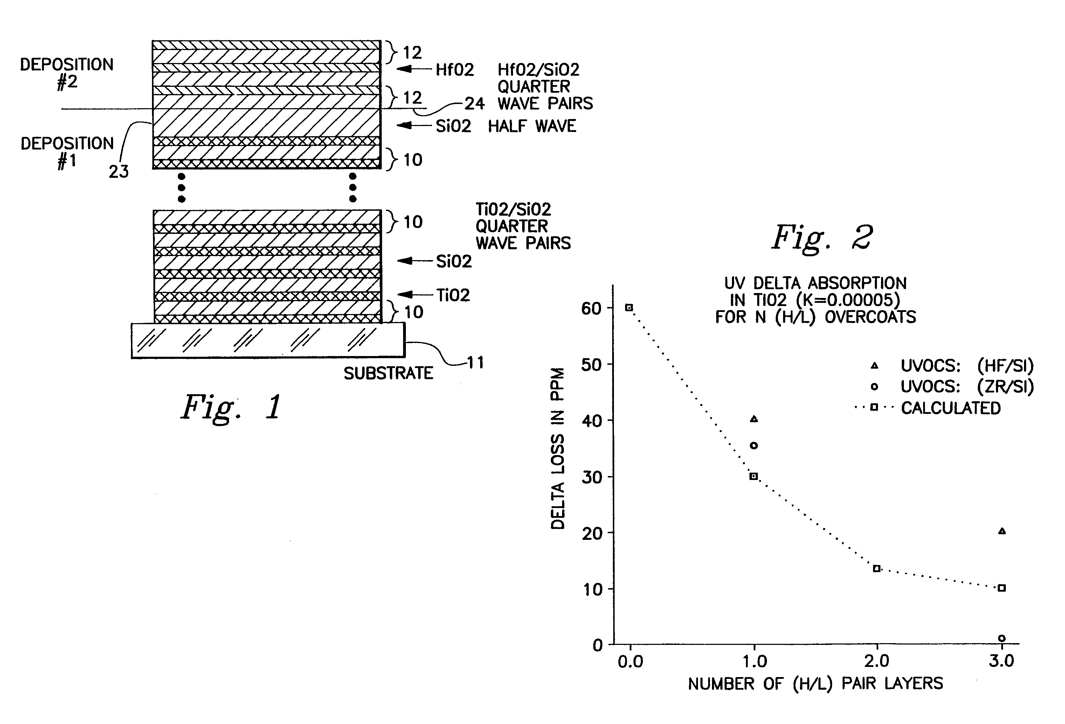

High reflectance multilayer dielectric mirrors are well known in the art, and find use particularly in the construction of laser gyros and ring laser gyros. A high reflectance mirror of this type is formed by depositing thin films of high/low refractive index pairs until a certain reflectance level is reached. An example is shown in FIGURE 1 where a plurality of $TiO_2/SiO_2$ quarter wave pairs 10 are deposited on a substrate 11. In this example, the $TiO_2$ is the high index material and the $SiO_2$ is the low index material. Table 1 below lists the refractive index of several materials used in this invention. The ratio of the index of $TiO_2$ to that of $SiO_2$ is high so that the reflectance level increases rapidly with a minimum number of layer pairs, such as eleven pairs, for example.

High index materials such as $TiO_2$ have low energy band gaps making them susceptible to UV degradation in the laser and also from plasma-induced loss centers at RLG operating wavelengths.

Table I

|  | Refractive Index | Band Gap | |
|---|---|---|---|
|  |  | eV | k(P) |
| TiO$_2$ | 2.45 | 3.5 | 3500 |
| SiO$_2$ | 1.46 | >7 | <1800 |
| HfO$_2$ | 2.1 | 5.5 | 2250 |
| ZrO$_2$ | 2.15 | 5.0 | 2500 |

UV radiation from the ring laser gyro plasma environment can penetrate into the mirror layers and generate absorption sites for the RLG 633nm radiation. These UV-induced reflectance changes effect the long term stability of gyro performance. The plasma-induced loss changes effect mirror lifetime and are generally believed to be caused by plasma-induced formation of electron or hole traps from which absorption at 633nm can occur. High energy band gap materials are not as susceptible to UV but because of their lower refractive index, require a larger number of layers to achieve high reflectance levels. In addition, the strong bonding of oxygen in highly insulating ZrO$_2$ and HfO$_2$ films make them more stable than TiO$_2$ against stoichrometric changes and electronic charge migration generated via plasma interaction. In this invention there is described a UV and plasma insensitive mirror design in which the high reflectance levels are achieved while still keeping the number of mirror pairs as low as possible.

Referring again to FIGURE 1, there is disclosed a first deposition of a number of quarter wave pairs 10 of TiO$_2$/SiO$_2$ on a suitable substrate 11, such as low expansion glass which suitably matches the thermal coefficient of the laser block (not shown). As an example, the TiO$_2$ and SiO$_2$ layers may be on the order of 700 P (angstroms) and 1100 P, respectively. This first deposition of TiO$_2$/SiO$_2$ pairs is followed by or continued with a second deposition of quarter wave pairs 12 of HfO$_2$/SiO$_2$ or ZrO$_2$/SiO$_2$. This design utilizes the fact that the top material HfO$_2$ or ZrO$_2$ has a large band gap and is not as effected by UV or plasma but has a lesser refractive index than TiO$_2$ requiring more layers to achieve the same mirror reflectance if used throughout. The underlying high index material such as TiO$_2$, has a high refractive index and therefore achieves high reflectance levels with fewer film layers but is sensitive to UV. By this two deposition structure taught herein which overcoats the TiO$_2$/SiO$_2$ layers with the HfO$_2$/SiO$_2$ or ZrO$_2$/SiO$_2$ layers, the UV sensitive material is buried in the stack and the mirror sensitivity to the UV is reduced, while the total layer count is maintained low.

For the standard prior art TiO$_2$/SiO$_2$ mirror, the UV radiation from the He-Ne plasma between 3000 and 4000 angstroms is absorbed mostly in the first few TiO$_2$ mirror layers: HfO$_2$/SiO$_2$ or ZrO$_2$/SiO$_2$, on the other hand, do not absorb this radiation nor transmit it to the underlying TiO$_2$ film. The exact profile depends on mirror material band gaps, absorption coefficients and UV wavelengths. The He-Ne 633nm laser fields in the mirror materials are reduced by 25-50% with each succeeding pair depending on mirror material. Since the UV-induced absorption at any one place in the mirror is proportional to $bE^2$, the product of UV-induced absorption coefficient and field strength squared, by burying the UV-absorbing TiO$_2$ film, it is possible to reduce the UV mirror sensitivity. Qualitatively by selecting the outer mirror materials so that wherever E is large, b is small, it is possible to reduce UV mirror sensitivity. FIGURE 2 shows the calculated reduction of UV-induced loss changes for standard TiO$_2$/SiO$_2$ mirrors when one and three HfO$_2$(n = 2.1)/SiO$_2$(1.46) pairs are added. These reductions assume no UV sensitivity in the top materials and are calculated relative to an estimated standard UV sensitivity of 60 ppm. This calculation is compared with data taken with one and three HfO$_2$/SiO$_2$ and ZrO$_2$/SiO$_2$ pairs on a TiO$_2$(n = 2.45)/SiO$_2$ mirror.

Referring more specifically to the first and second deposition described in FIGURE 1, the first deposition of the TiO$_2$/SiO$_2$ layer pairs continues until a certain reflectance is reached (i.e., a reflectance of 99.99%, for example). The second high index/low index deposition of HfO$_2$/SiO$_2$ or ZrO$_2$/SiO$_2$ material can be deposited on top of the existing stack until the final desired reflectance is achieved. Alternately, if the deposition system does not have the capability of sputtering three different materials, a half wave low index film 23 can be added as shown in FIGURE 1 to both protect the high index TiO$_2$ film from degradation and provide a low field surface interface which is insensitive to loss changes induced by surface contamination. In a second deposition system, the second deposition of HfO$_2$/SiO$_2$ or ZrO$_2$/SiO$_2$ pairs can be added as shown. The advantage of depositing a half wave of SiO$_2$ is that the region 24 between the two SiO$_2$ films is a low field interface and this reduces the effect of up-to-air contamination on mirror absorption.

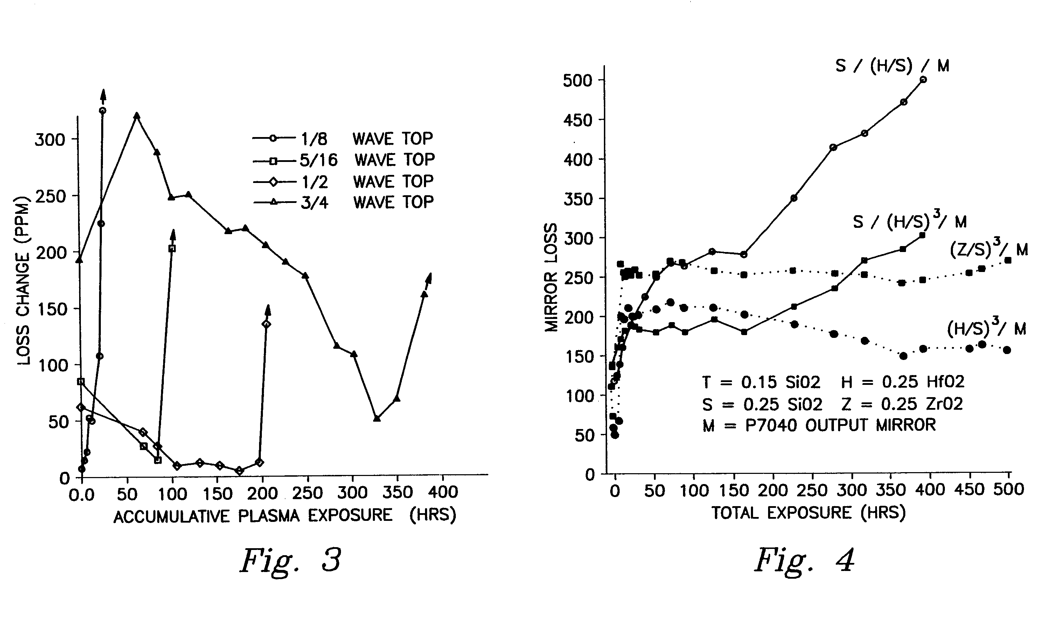

FIGURE 3 is a graphical presentation showing a typical plasma-induced loss change for ion beam $TiO_2/SiO_2$ mirrors with various $SiO_2$ thicknesses. Along the ordinate is plotted loss change in PPM (parts per million) and along the abscissa is plotted accumulated plasma exposure in hours.

FIGURE 4 is a graphical presentation showing absolute plasma-induced loss changes for three layer pairs of either $ZrO_2/SiO_2$ or $HfO_2/SiO_2$ stack deposited on a $TiO_2/SiO_2$ mirror. Along the ordinate is plotted mirror loss change in ppm and along the abscissa is plotted total plasma exposure in hours. Noteworthy is the lack of any dramatic increase in loss compared to $TiO_2/SiO_2$ mirrors even though the high index $HfO_2$ or $ZrO_2$ film is exposed directly to the plasma.

## Claims

1. A high-reflectance multilayer dielectric mirror comprising a mirror substrate (11); and a first plurality of UV sensitive high index/low index dielectric quarter wave layer pairs (10) deposited on said substrate: **characterized by** a second plurality of UV insensitive high index/low index dielectric quarter wave layer pairs (12) deposited over said first layer pairs.

2. An ultraviolet-resistant mirror according to claim 1, **characterized in that** said first plurality of thin film quarter wave layer pairs (10) consists of $TiO_2/SiO_2$ and said second plurality of dielectric thin film quarter wave layer pairs (12) is selected from the UV insensitive group consisting of $HfO_2/SiO_2$ and $ZrO_2/SiO_2$.

3. An ultraviolet-resistant mirror according to claim 1 or 2 for use in a He-Ne plasma environment, which plasma includes undesirable UV emanations, in particular for use in a 633 nm He-Ne laser environment, **characterized by** the mirror comprising

   a) a mirror substrate (11);

   b) a first high refractive index dielectric material ($TiO_2$). which material has a low energy band gap making it susceptible to UV degradation;

   c) a second somewhat lower high refractive index dielectric material ($HfO_2$), which material has a high energy band gap making it UV insensitive;

   d) a low refractive index dielectric material ($SiO_2$);

   e) a plurality of thin film quarter-wave layer pairs of said first high index and said low index materials (10), deposited on said substrate (11), said pairs having a rapid gain in mirror reflectance, but being UV sensitive; and

   f) a second plurality of thin-film quarter-wave layer pairs of said second high index and said low index materials (12) deposited over aforesaid pairs to increase said reflectance while not being affected by said UV emanations, whereby aforesaid pairs are shielded from UV.

4. The mirror according to claim 1, 2 or 3 in which said second layer pairs consist of $ZrO_2/SiO_2$.

5. The mirror according to claim 1, 2 or 3 in which said second layer pairs consist of $HfO_2/SiO_2$.

6. The mirror according to one of the preceding claims, **characterized in that** the $TiO_2$ and $SiO_2$ layers are on the order of 700 angstroms and 1100 angstroms, respectively.

Fig. 1

DEPOSITION #2

DEPOSITION #1

HfO2 — HfO2/SiO2 QUARTER WAVE PAIRS

SiO2 HALF WAVE

TiO2/SiO2 QUARTER WAVE PAIRS

SiO2

TiO2

SUBSTRATE

Fig. 2

UV DELTA ABSORPTION
IN TiO2 (K=0.00005)
FOR N (H/L) OVERCOATS

△ UVOCS: (HF/SI)
○ UVOCS: (ZR/SI)
···□··· CALCULATED

DELTA LOSS IN PPM

NUMBER OF (H/L) PAIR LAYERS

EP 0 372 438 A2

EP 0 372 438 A2

S / (H/S) / M

S / (H/S)³ / M

(Z/S)³/ M

(H/S)³ / M

T = 0.15 SiO2    H = 0.25 HfO2
S = 0.25 SiO2    Z = 0.25 ZrO2
M = P7040 OUTPUT MIRROR

MIRROR LOSS

500 450 400 350 300 250 200 150 100 50 0

0   50  100 150 200 250 300 350 400 450 500
TOTAL EXPOSURE (HRS)

*Fig. 4*

1/8    WAVE TOP
5/16   WAVE TOP
1/2    WAVE TOP
3/4    WAVE TOP

LOSS CHANGE (PPM)

300 250 200 150 100 50

0.0  50  100 150 200 250 300 350 400
ACCUMULATIVE PLASMA EXPOSURE  (HRS)

*Fig. 3*